# EUROPÄISCHE PATENTSCHRIFT

(11) **EP 2 611 601 B1**
(45) Veröffentlichungstag und Bekanntmachung des Hinweises auf die Patenterteilung: **25.06.2014**
(21) Anmeldenummer: 11741127.2
(22) Anmeldetag: 05.08.2011
(51) Int. Cl.: B29C 70/64, B29C 43/30, B29D 99/00, E04F 15/10, E04F 15/16, B29C 35/02, B29K 9/06, B29L 31/30, B29L 31/00

(54) **BODENBELAG UND VERFAHREN ZUR HERSTELLUNG DES SELBEN**
FLOOR COVERING AND METHOD FOR PRODUCING THE SAME
REVÊTEMENT DE SOL ET PROCÉDÉ DE FABRICATION CORRESPONDANT

(30) Priorität: 01.09.2010 DE 102010036122
(43) Veröffentlichungstag der Anmeldung: 10.07.2013
(73) Patentinhaber: Nora Systems GmbH, 69469 Weinheim (DE)
(72) Erfinder: GRUN, Gregor, 66482 Zweibrücken (DE); KRÖGER, Mario, 76646 Bruchsal (DE); RISCHER, Dieter, 69518 Abtsteinach (DE)
(74) Vertreter: Reiser & Partner
(86) Internationale Anmeldenummer: PCT/EP2011/003938
(87) Internationale Veröffentlichungsnummer: WO 2012/028241

(56) Entgegenhaltungen:
- EP-A2- 1 884 607
- JP-A- 2005 290 607
- US-A1- 2001 005 542

## Beschreibung

Die Erfindung betrifft einen Bodenbelag, umfassend eine im Wesentlichen bahn- oder plattenförmige Matrix aus einem elastomeren Material gebildet aus Kautschuk, wobei die Matrix mit Partikeln aus einem thermoplastischen Material versehen ist.

Ein derartiger Bodenbelag ist aus der DE 198 48 137 B4 bekannt. Der dort gezeigte Bodenbelag ist zur Farbgestaltung mit Partikeln versehen, welche auf das zu einer Bahn geformte Basismaterial aufgestreut werden. Die Partikel bestehen dabei aus einem unvulkanisierten Kautschukmaterial. In der nachgeschalteten thermischen Behandlung erfolgt eine Aufweichung der Partikel, so dass diese durch Einwirkung mechanischer Kräfte verformt werden. Dadurch entsteht ein homogener Verbund der Partikel. Durch die Einwirkung mechanischer Kräfte und hoher Temperaturen werden die Partikel fest in die Matrix eingebunden.

Die JP 2005/290607 zeigt einen Bodenbelag, bei dem sowohl die Matrix als auch die Partikel aus thermoplastischem Material bestehen.

Die EP 1 884 607 A2 zeigt einen Bodenbelag mit einer Matrix aus elastomerem Werkstoff und Partikeln aus thermoplastischem Werkstoff gemäß dem Oberbegriff des Anspruchs 1.

Der Bodenbelag gemäß der US 2001/005542 A1 umfasst eine Matrix und Partikel, jeweils aus vulkanisierbarem Material.

Bei der Verwendung von nichtvernetzenden Partikeln, beispielsweise thermoplastischen Werkstoffen ist die Einbindung in die Matrix des Bodenbelags dagegen problematisch. Bislang wurde die Einbindung der Partikel durch Einsatz eines Haftvermittlers verbessert. Der Haftvermittler verursacht jedoch Mehrkosten und ist aufwendig in der Verarbeitung.

Der Erfindung liegt die Aufgabe zugrunde, einen Bodenbelag bereitzustellen, der mit Partikeln versehen ist, welche einfach und fest in die Matrix eingebunden sind.

Diese Aufgabe wird mit den Merkmalen der Ansprüche 1 und 9 gelöst. Auf vorteilhafte Ausgestaltungen nehmen die Unteransprüche Bezug.

Zur Lösung der Aufgabe weisen das elastomere Material der Matrix und das thermoplastische Material der Partikel jeweils wenigstens ein übereinstimmendes Monomer auf. Die identischen Monomere der beiden Komponenten weisen zueinander gute Hafteigenschaften auf, so dass sich eine besonders gute Haftung der Partikel in der Matrix ergibt. Die Haftung kann bei Verwendung eines Haftvermittlers nochmals verbessert werden. Bei Verwendung von Styrol-Butadien-Kautschuk (SBR), einem häufig zur Herstellung von Bodenbelägen verwendeten Kunststoff, kann sowohl das Styrol als auch das Butadien ein Monomer sein, welches mit einem Monomer in dem thermoplastischen Material übereinstimmt. Derartige thermoplastische Werkstoffe sind beispielsweise Polystyrol (PS) und Styrol-Butadien-BlockCopolymer (SBS).

Das elastomere Material der Matrix ist aus einem Kautschuk gebildet. Bodenbeläge aus derartigen Werkstoffen weisen vorteilhafte Gebrauchseigenschaften wie Rutschsicherheit, Trittschalldämpfung und geringe elektrostatische Aufladung auf. Des Weiteren können die Polymere derart gewählt werden, dass der Bodenbelag zudem ein vorteilhaftes, insbesondere emissionsarmes Brandverhalten aufweist. Vorteilhafte Werkstoffe für die Matrix des Bodenbelags sind Nitril-Butadien-Kautschuk (NBR), Styrol-Butadien-Kautschuk (SBR), Butadien-Kautschuk (BR), Ethylen-Propylen-Dien-Kautschuk (EPDM), Naturkautschuk (NR) und Isopren-Kautschuk (IR).

Das thermoplastische Material kann als thermoplastisches Elastomer ausgebildet sein. Thermoplastische Elastomere (TPE) sind Kunststoffe die bei Raumtemperatur einem Elastomer vergleichbare Eigenschaften und bei hohen Temperaturen, oberhalb der Erweichungs- und/oder Schmelztemperatur, einem Thermoplasten vergleichbare Eigenschaften aufweisen. Dadurch weist ein Gegenstand aus thermoplastischem Elastomer bei Raumtemperatur eine vergleichsweise geringe Härte und ein gummiähnliches Rückstellvermögen auf. Bei hohen Temperaturen lösen sich die Vernetzungspunkte des thermoplastischen Elastomers reversibel, so dass eine Verarbeitung des Werkstoffs mit thermoplastischen Formgebungsverfahren, beispielsweise in Spritzgieß- oder Extrusionsanlagen möglich ist, wobei sich die elastomeren Eigenschaften nach dem Auskühlen wieder einstellen.

Die Partikel können zumindest teilweise transparent ausgebildet sein. Insbesondere thermoplastische Elastomere sind in einer großen Farbvielfalt und insbesondere auch transparent verfügbar, wobei insbesondere die Verwendung eines transparenten thermoplastischen Elastomers die Herstellung eines teilweise transparenten oder bei Einfärbung der Partikel auch die Herstellung eines teilweise transluzenten Bodenbelags ermöglicht. Des Weiteren kann der Bodenbelag so ausgeführt werden, dass er durchleuchtbar ist. Dabei ist insbesondere vorteilhaft, dass ein transparentes thermoplastisches Elastomer in einer Härte ausgeführt werden kann, die im Wesentlichen der Härte des vulkanisierten elastomeren Materials der Matrix entspricht. Somit ist es möglich, einen Bodenbelag bereitzustellen, der vollflächig über vergleichbare Eigenschaften verfügt. Ein transparent ausgebildeter vulkanisierbarer elastomerer Werkstoff weist dagegen stets eine geringere Härte als die Matrix auf, so dass der Bodenbelag nicht über durchgehend gleichmäßige Eigenschaften verfügt.

Der transparent ausgeführte thermoplastische Werkstoff kann ferner mit Effektpigmenten versehen sein. Effektpigmente verleihen dem Bodenbelag winkelabhängige Farbton- oder Glanzänderungen. Diese bestehen meist aus metallischen Partikeln mit bestimmten optischen Eigenschaften. Die Wirkung dieser Effektpigmente tritt bei transparenten Werkstoffen besonders deutlich hervor, wobei die Pigmente in der Matrix des transparenten thermoplastischen Werkstoffs besonders sicher eingebunden sind.

Das elastomere Material und das thermoplastische Material können mit Füllstoffen versehen sein, wobei der Anteil der Füllstoffe des elastomeren Materials größer ist als der Anteil der Füllstoffe des thermoplastischen Materials. Füllstoffe verbessern die für einen Bodenbelag wünschenswerten Eigenschaften der für den Bodenbelag verwendeten Werkstoffe. Allerdings beeinträchtigen die meisten Füllstoffe, beispielsweise Ruß, die Transparenz des thermoplastischen Materials. Daher ist der Anteil der Füllstoffe in dem transparenten Material vorzugsweise geringer als der Anteil der Füllstoffe in dem elastomeren Material. Aufgrund des mengenmäßig wesentlich höheren Anteils des elastomeren Materials ergibt sich jedoch insgesamt ein Bodenbelag mit den gewünschten vorteilhaften Eigenschaften.

Die Partikel können aus Halbzeugen gebildet sein. Dazu wird das thermoplastische Elastomer vor dem Aufstreuen auf die Matrix einem Formgebungsprozess unterworfen. Vorteilhafte Formgebungsprozesse sind übliche thermoplastische Urformverfahren wie das Spritzgießen und die Extrusion. Bei diesen Verfahren können Partikel in einer großen Formenvielfalt bereitgestellt werden. Denkbare Formen sind im Spritzgießprozess hergestellte Freiformen, Zylinderabschnitte mit rundem, kreisringförmigem, sternförmigem oder ovalem Querschnitt. Des Weiteren können die Partikel in Form von Schnüren in beliebiger Länge oder in Form von Bändern mit beliebigem Querschnitt ausgebildet sein. Diese Schnüre oder Bänder können in geordneten Mustern, beispielsweise in Streifen- oder Schneckenform oder in unwillkürlichen Mustern, beispielsweise in Spaghetti-Form auf das elastomere Material aufgebracht werden. Zur Herstellung der Partikel wird mittels Spritzgießen oder Extrusion ein Strangprofil hergestellt und anschließen auf die gewünschte Länge zugeschnitten. Es ist auch denkbar zunächst eine flächige Lage herzustellen und diese anschließend zu unregelmäßigen Partikeln zu schreddern.

Vorzugsweise ist das thermoplastische Material derart ausgewählt, dass dessen Erweichungs-und/oder Schmelztemperatur unterhalb der Vulkanisationstemperatur des elastomeren Material liegt. Dadurch schmelzen die Partikel während der Vulkanisation des elastomeren Materials der Matrix wenigstens an den Randbereichen auf und es erfolgt ein gegenseitiges Durchdringen an der Grenzfläche der Partikel. Nach Abschluss der Vulkanisation sind die Partikel besonders fest in die Matrix des Bodenbelags eingebunden.

Das elastomere Material und das thermoplastische Material können Styrol und/oder Butadien und/oder Ethylen und/oder Propylen und/ oder Isopren als übereinstimmendes Monomer aufweisen. Diese Monomere sind in der Kunststoffchemie, sowohl für thermoplastische als auch für elastomere Werkstoffe, häufig verwendete Monomere.

Einige Ausführungsbeispiele des erfindungsgemäßen Bodenbelags werden nachfolgend anhand der Beispiele näher erläutert.

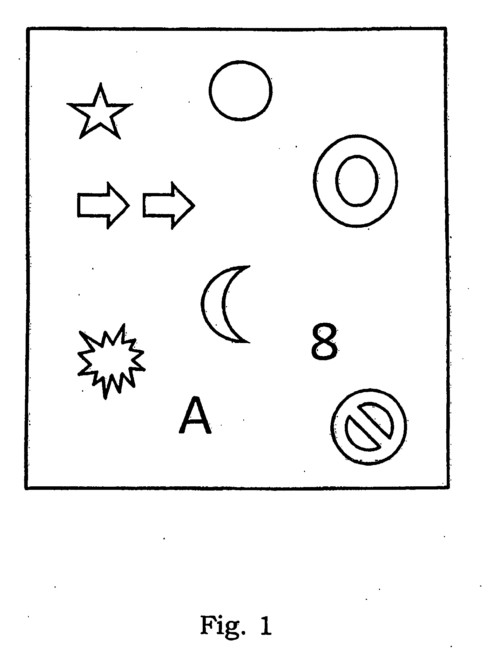

Figur 1 zeigt beispielhaft einen verlegbaren Bodenbelag mit einer Matrix aus elastomerem Material, welche mit Partikeln aus thermoplastischem Material versehen ist. Die Partikel sind transparent, aus Halbzeugen hergestellt und daher in einer großen Formenvielfalt verfügbar. Die Figur zeigt lediglich beispielhaft Partikel mit kreisförmigem, ringförmigem, halbmondförmigem und sternförmigem Querschnitt.

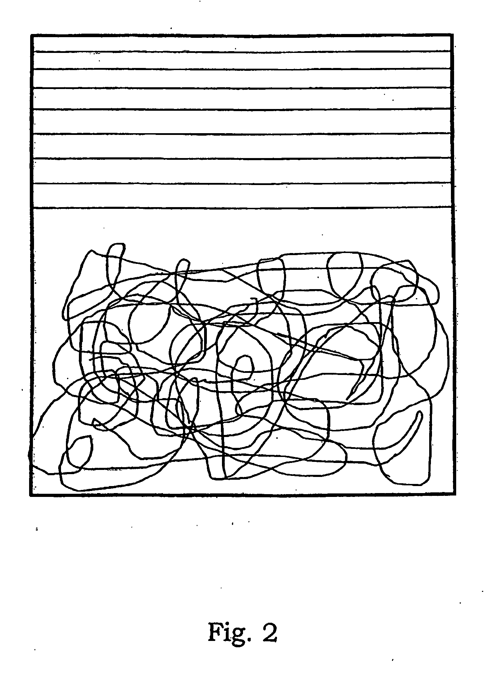

Figur 2 zeigt beispielhaft einen Bodenbelag gemäß Figur 1, wobei die Partikel in dieser Ausgestaltung als Bänder und Schnüre ausgebildet sind. Die Figur 2 zeigt ferner die Anordnung der Partikel in Streifenform und als unwillkürliches Spaghettimuster.

### Beispiel 1

Beispiel 1 zeigt einen Bodenbelag mit einer plattenförmigen Matrix aus elastomerem Material, in dieser Ausgestaltung aus Styrol-Butadien-Kautschuk (SBR). Die Matrix ist mit transparenten Partikeln aus einem thermoplastischen Elastomer versehen, in dieser Ausgestaltung Styrol-Butadien-BlockCopolymer (SBS). Dabei kann das thermoplastische Elastomer zusätzlich mit Effektpigmenten versehen sein. Das elastomere Material der Matrix und der thermoplastische Werkstoff der Partikel weisen als übereinstimmendes Monomer Styrol auf. Zur Verbesserung der Materialeigenschaften ist das elastomere Material und das thermoplastische Material mit Füllstoffen versehen, wobei der Gehalt an Füllstoffen bei dem elastomeren Material größer ist als bei dem thermoplastischen Material. Des Weiteren weist SBS eine Erweichungstemperatur von 95 °C auf, die unterhalb der für SBR vorgesehenen Vulkanisationstemperatur von etwa 180°C liegt.

Weitere erfindungsgemäße Materialkombinationen sind in der unten stehenden Tabelle gezeigt.

Zur Herstellung der Partikel wurde zunächst mittels Extrusion ein Strangprofil als Halbzeug hergestellt, welches anschließend zugeschnitten wurde. Dadurch entstanden Partikel mit vorgegebenem Profil in vorgegebener Länge. Die so konfektionierten Partikel wurden auf ein plattenförmig geformtes elastomeres Material aufgestreut, mittels Kalander zu einer Bahn geformt und zur Vulkanisation des SBR einer Wärmebehandlung unterworfen. Durch das übereinstimmende Monomer Styrol sind die Partikel fest in die Matrix des Bodenbelags eingebunden.
In einer weiteren vorteilhaften Ausgestaltung sind die Partikel in Form von Bändern oder Schnüren ausgebildet.

### Beispiel 2

Beispiel 2 zeigt einen Bodenbelag mit einer plattenförmigen Matrix aus elastomerem Material, in dieser Ausgestaltung aus Nitril-Butadien-Kautschuk (NBR). Die Matrix ist mit verschiedenfarbigen Partikeln aus einem thermoplastischen Elastomer versehen, in dieser Ausgestaltung Styrol-Butadien-Block-Copolymer (SBS). Das elastomere Material der Matrix und der thermoplastische Werkstoff der Partikel weisen als übereinstimmendes Monomer Butadien auf.

Zur Herstellung der Partikel wurden zunächst mittels Spritzgießen Freiformen hergestellt. Ferner wurde das elastomere Material zu einer Bahn geformt, anschließend wurde die Partikel auf die Bahn aufgestreut und zur Vulkanisation des SBR einer Wärmebehandlung unterworfen. Durch das übereinstimmende Monomer Butadien sind die Partikel fest in die Matrix des Bodenbelags eingebunden.

### Beispiel 3

Beispiel 3 zeigt einen Bodenbelag mit einer plattenförmigen Matrix aus elastomerem Material, in dieser Ausgestaltung aus Styrol-Butadien-Kautschuk (SBR). Die Matrix ist mit transparenten Partikeln aus einem thermoplastischen Material versehen, in dieser Ausgestaltung Polystyrol (PS). In dem thermoplastischen Material sind metallische Effektpartikel eingebunden. Das elastomere Material der Matrix und der thermoplastische Werkstoff der Partikel weisen als übereinstimmendes Monomer Styrol auf.

Zur Herstellung der Partikel wurde zunächst mittels Extrusion eine Flächenware als Halbzeug hergestellt, welches anschließend zu Partikeln geschreddert wurde. Dadurch entstanden unwillkürlich geformte Partikel. Das elastomere Material wurde mittels Kalander zu einer Bahn geformt, anschließend wurde die Partikel auf die Bahn aufgestreut, erneut kalandriert und die mit den Partikeln versehene Bahn wurde zur Vulkanisation des SBR einer Wärmebehandlung unterworfen. Durch das übereinstimmende Monomer Styrol sind die Partikel fest in die Matrix des Bodenbelags eingebunden.

In der folgenden Tabelle sind erfindungsgemäße Materialkombinationen elastomerer Materialien und thermoplastischer Materialien zur Herstellung eines gemäß den Beispielen beschriebenen Bodenbelags aufgeführt:

| Matrix | Partikel |
|---|---|
| Nitril-Butadien-Kautschuk (NBR) | SBS (Styrol-Butadien-BlockCopolymer) |
| Styrol-Butadien-Kautschuk (SBR) | SBS |
| SBR | SEBS (SBS hydriert) |
| SBR | (Styrol-Isopren-Block-Copolymer) |
| SBR | SEBS |
| Butadien-Kautschuk (BR) | SBS |
| Ethlyen-Propylen-DienKautschuk (EPDM) | SEBS |
| Naturkautschuk (NR) | SIS |
| Isopren-Kautschuk (IR) | SIS |
| Ethylen-Propylen-DienKautschuk (EPDM) | Polyethylen (PE) |
| EPDM | Polypropylen (PP) |
| NBR | Polyacrylnitril (PAN) |
| NBR | Acrylnitril-Butadien-Styrol-Copolymer |
| SBR | Polystyrol (PS) |

## Patentansprüche

1. Bodenbelag, umfassend eine im Wesentlichen bahn- oder plattenförmige Matrix aus einem elastomeren Material gebildet aus Kautschuk, wobei die Matrix mit Partikeln aus einem thermoplastischen Material versehen ist, **dadurch gekennzeichnet, dass** das elastomere Material der Matrix und das thermoplastische Material der Partikel jeweils wenigstens ein übereinstimmendes Monomer aufweisen.

2. Bodenbelag nach Anspruch 1, **dadurch gekennzeichnet, dass** das thermoplastische Material als thermoplastisches Elastomer ausgebildet ist.

3. Bodenbelag nach Anspruch 1 oder 2, **dadurch gekennzeichnet, dass** die Partikel zumindest teilweise transparent ausgebildet sind.

4. Bodenbelag nach einem der Ansprüche 1 bis 3, **dadurch gekennzeichnet, dass** in die Partikel Effektpigmente eingebracht sind.

5. Bodenbelag nach einem der Ansprüche 1 bis 4, **dadurch gekennzeichnet, dass** das elastomere Material und das thermoplastische Material mit Füllstoffen versehen sind, wobei der Anteil der Füllstoffe des elastomeren Materials größer ist als der Anteil der Füllstoffe des thermoplastischen Materials.

6. Bodenbelag nach einem der Ansprüche 1 bis 5, **dadurch gekennzeichnet, dass** die Partikel aus Halbzeugen gebildet sind.

7. Bodenbelag nach einem der Ansprüche 1 bis 6, **dadurch gekennzeichnet, dass** das thermoplastische Material derart ausgewählt ist, dass dessen Erweichungs- und/oder Schmelztemperatur unterhalb der Vulkanisationstemperatur des elastomeren Material liegt.

8. Bodenbelag nach einem der Ansprüche 1 bis 7, **dadurch gekennzeichnet, dass** das elastomere Material und das thermoplastische Material Styrol und/oder Butadien und/oder Ethylen und/oder Propylen und/oder Isopren als übereinstimmendes Monomer aufweisen.

9. Verfahren zur Herstellung eines Bodenbelags bei dem zunächst Partikel aus thermoplastischem Material bereitgestellt werden, aus Kautschukmaterial eine flächige Matrix hergestellt wird, anschließend die Partikel auf die Matrix aufgestreut werden und die Matrix einem Vulkanisationsprozess unterzogen wird, wobei das Material der Matrix und das thermoplastische Material der Partikel jeweils wenigstens ein übereinstimmendes Monomer aufweisen.

## Claims

1. Floor covering comprising a matrix which in essence takes the form of a web or sheet and is made of an elastomeric material composed of rubber, wherein the matrix has been provided with particles made of a thermoplastic material, **characterized in that** the elastomeric material of the matrix and the thermoplastic material of the particles respectively have at least one identical monomer.

2. Floor covering according to Claim 1, **characterized in that** the thermoplastic material is thermoplastic elastomer.

3. Floor covering according to Claim 1 or 2, **characterized in that** the particles are at least to some extent transparent.

4. Floor covering according to any of Claims 1 to 3, **characterized in that** special-effect pigments have been introduced into the particles.

5. Floor covering according to any of Claims 1 to 4, **characterized in that** the elastomeric material and the thermoplastic material have been provided with fillers, wherein the proportion of the fillers of the elastomeric material is greater than the proportion of the fillers of the thermoplastic material.

6. Floor covering according to any of Claims 1 to 5, **characterized in that** the particles are composed of semifinished products.

7. Floor covering according to any of Claims 1 to 6, **characterized in that** the selection of the thermoplastic material is such that the softening point and/or melting point thereof is below the vulcanization temperature of the elastomeric material.

8. Floor covering according to any of Claims 1 to 7, **characterized in that** the elastomeric material and the thermoplastic material have, as identical monomer, styrene and/or butadiene and/or ethylene and/or propylene.

9. Process for the production of a floor covering in which particles made of thermoplastic material are first provided, a two-dimensional matrix is produced from rubber material, and then the particles are scattered onto the matrix and the matrix is subjected to a vulcanization process, wherein the material of the matrix and the thermoplastic material of the particles respectively have at least one identical monomer.

## Revendications

1. Revêtement de sol, comprenant une matrice essentiellement en forme de bande ou de plaque en un matériau élastomère formé à partir de caoutchouc, la matrice étant pourvue de particules en un matériau thermoplastique, **caractérisé en ce que** le matériau élastomère de la matrice et le matériau thermoplastique des particules présentent à chaque fois au moins un monomère correspondant.

2. Revêtement de sol selon la revendication 1, **caractérisé en ce que** le matériau thermoplastique est conçu en tant qu'élastomère thermoplastique.

3. Revêtement de sol selon la revendication 1 ou 2, **caractérisé en ce que** les particules sont conçues au moins partiellement transparentes.

4. Revêtement de sol selon l'une quelconque des revendications 1 à 3, **caractérisé en ce que** des pigments à effet sont introduits dans les particules.

5. Revêtement de sol selon l'une quelconque des revendications 1 à 4, **caractérisé en ce que** le matériau élastomère et le matériau thermoplastique sont pourvus de charges, la proportion de charges du matériau élastomère étant supérieure à la proportion de charges du matériau thermoplastique.

6. Revêtement de sol selon l'une quelconque des revendications 1 à 5, **caractérisé en ce que** les particules sont formées à partir de produits semi-finis.

7. Revêtement de sol selon l'une quelconque des revendications 1 à 6, **caractérisé en ce que** le matériau thermoplastique est choisi de manière telle que sa température de ramollissement et/ou sa température de fusion est inférieure à la température de vulcanisation du matériau élastomère.

8. Revêtement de sol selon l'une quelconque des revendications 1 à 7, **caractérisé en ce que** le matériau élastomère et le matériau thermoplastique présentent du styrène et/ou du butadiène et/ou de l'éthylène et/ou du propylène et/ou de l'isoprène en tant que monomère correspondant.

9. Procédé pour la fabrication d'un revêtement de sol dans lequel on met d'abord à disposition les particules en matériau thermoplastique, on réalise une matrice plane à partir d'un matériau caoutchouteux, on répand ensuite les particules sur la matrice et on soumet la matrice à un procédé de vulcanisation, le matériau de la matrice et le matériau thermoplastique des particules présentant à chaque fois au moins un monomère correspondant.
